Europäisches Patentamt

European Patent Office

Office européen des brevets

(11) Veröffentlichungsnummer: **0 523 542 A1**

# EUROPÄISCHE PATENTANMELDUNG

(21) Anmeldenummer: **92111650.5**

(22) Anmeldetag: **09.07.92**

(51) Int. Cl.5: **C08J 5/18**, C08L 23/04

(30) Priorität: **15.07.91 DE 4123327**

(43) Veröffentlichungstag der Anmeldung:
**20.01.93 Patentblatt 93/03**

(84) Benannte Vertragsstaaten:
**AT BE DE DK ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Rohrka, Heinz-Werner**
**Aulgasse 2a**
**W-6229 Kiedrich(DE)**
Erfinder: **Müller, Rolf**
**Wenzel-Jaksch-Strasse 9**
**W-6200 Wiesbaden(DE)**
Erfinder: **Danz, Helmut**
**Amselweg 21**
**W-6483 Bad Soden/Salmünster(DE)**

(54) **Transparente Folie aus Polyethylen.**

(57) Eine transparente Folie aus Polyethylen hoher Dichte (HDPE) für die Verpackung von Gütern durch Dreheinschlag besteht aus einer Basisschicht ohne Deckschichten oder mindestens einer Deckschicht und ist monoaxial in Längsrichtung orientiert. Die Basisschicht enthält ein Homopolymer oder ein Copolymer mit einem überwiegenden Anteil von HDPE, mit einem Erweichungspunkt von 128 bis 136 °C. Die bleibende Dehnung quer zur Orientierungsrichtung ist größer als 40 %, insbesondere größer als 80 %. In Orientierungsrichtung liegt die bleibende Dehnung über 30 %, insbesondere über 40 %. Die Deckschichten bestehen aus dem gleichen Polymer wie die Basisschicht oder aus einem Blend dieses Polymers mit Polybutylen. Die Dicke der Deckschichten liegt im Bereich von 0,5 bis 10 $\mu$m. Den Deckschichten oder der Basisschicht können Additive beigefügt sein. Die Folie besitzt sehr gute Twist- und optische Eigenschaften.

EP 0 523 542 A1

Die Erfindung betrifft eine transparente Folie aus Polyethylen hoher Dichte, bestehend aus einer Basisschicht ohne Deckschicht oder mindestens einer Deckschicht, ein verfahren zur Herstellung einer solchen Polyethylenfolie sowie ihre Verwendung. Diese Folie wird u.a. auf dem Verpackungsgebiet eingesetzt.

Eine besondere Art des Verschlusses von Volleinschlägen, die Verpackungsgüter umschließen, ist das Drehen oder Wrappen. Bekannt ist diese Art von Verpackung beim Volleinschlag kleinerer Verpackungsgüter, die rund oder annähernd rund sind, wie z. B. Bonbons, Flaschen, Kerzen, Dropsrollen, Schokoladen - und Marzipanriegel, Ostereier oder ähnliche Güter.

Voraussetzung für das Drehen der Volleinschläge ist ein gutes Twistverhalten der Folie, die an den Drehstellen nicht ein- oder abreißen darf, andererseits aber so steif sein muß, daß beim Drehvorgang kein Schrumpfen oder Krumpeln auftritt. Nach dem Stand der Technik werden für Bonboneinschläge vorwiegend Zellglas, also regenerierte Zellulose, nicht orientiertes Polypropylen oder PVC-Folien verwendet. PP-Folien (pp = Polypropylen), die sich durch ein gutes Twistverhalten auszeichnen, sind bekannt.

In der GB-A 12 31 861 (ICI) wird eine boPP-Folie beschrieben (boPP = biaxial oriented Polypropylen), die nach dem Bubble-Verfahren hergestellt wird und die eine gute Drehfähigkeit besitzt. Die Drehfähigkeit erhält die Folie durch Ausrüstung des PP-Homopolymeren mit einem niedrigmolekularen Kohlenwasserstoffharz und durch eine bevorzugte Orientierung der Folie in Maschinenrichtung. Für die Verarbeitung auf schnellaufenden Einschlagmaschinen ist die Folie zusätzlich antistatisch ausgerüstet.

Durch die wesentlich höhere Orientierung der Folie in Längsrichtung neigt sie beim Einwickeln, z. B. von Bonbons, zum Spleißen. Der Zwirbel kann an der Verdrillstelle abreißen. Von weiterem Nachteil sind die nicht befriedigenden Laufeigenschaften der Folie auf schnellaufenden Einwickelmaschinen. Verbesserungswürdig sind daneben auch noch die optischen Eigenschaften und die Schrumpfeigenschaften der Folie.

Zudem ist das beschriebene Verfahren zur Herstellung einer vorwiegend längsorientierten Folie sehr aufwendig (balanced Orientierung mittels bubble + Nachstrecken/-schrumpfen durch Offline-Prozeß). Die Folie wird hierdurch vergleichsweise teuer.

In der DE-A 35 35 472 wird eine Folie beschrieben,die sich ebenfalls gut für den Dreheinschlag eignet. Durch die Zugaben von Siloxan und Antiblockmittel in den Deckschichten erhält die Folie die gewünschten Verarbeitungseigenschaften auf schnellaufenden Dreheinschlagautomaten.

Nachteilig an der Folie sind die relativ hohen Harzgehalte, die für die gute Dreheinschlagsfähigkeit benötigt werden. Als Beispiel werden dort 25 Gew.-% angegeben. Hierdurch verteuert sich die Folie drastisch.

Bei kleineren Harzgehalten ist bei der beschriebenen Folie nicht gewährleistet, daß die geforderten Dreheigenschaften erreicht werden. Außerdem ist die Folie noch hinsichtlich ihres Schrumpfverhaltens und in den optischen Eigenschaften verbesserungsbedürftig.

In der EP-A O 317 276 (Courtaulds) wird ebenfalls eine Folie für den Dreheinschlag beansprucht. Aufgrund der in den Beispielen angegebenen Streckparameter ( $_l$ = 3,5, q = 9-10) ist die Folie mehr in Querrichtung orientiert. Solche Folien sind in ihrem Twistverhalten stark verbesserungsbedürftig. In neuester Zeit wurden verschiedentlich biaxial orientierte Polypropylenfolien für den Dreheinschlag vorgeschlagen.

Aufgabe der vorliegenden Erfindung ist es, eine transparente Dreheinschlagfolie aus hochdichtem Polyethylen (HDPE = high density polyethylene) bereitzustellen, die preiswerter und damit wirtschaftlicher herstellbar ist als bekannte Folien und die nach dem seitlichen Eindrehen in der eingedrehten Form eine hohe Stabilität aufweist, so daß die eingedrehten Verpackungsgüter sich nicht durch selbständiges Aufdrehen der Folie aus der Folie herauslösen können, und die zusätzliche gute optische Eigenschaften bei niedrigen Schrumpfwerten besitzt.

Diese Aufgabe wird erfindungsgemäß dadurch gelöst, daß die Polyethylenfolie monoaxial in Längsrichtung orientiert ist und eine bleibende Dehnung quer zur Orientierungsrichtung größer als 80 % und längs zur Orientierungsrichtung größer als 30 % aufweist.

Die bleibende Dehnung längs zur Orientierungsrichtung kann auch im Bereich von größer 20 % bis 30 % liegen, jedoch ist eine bleibende Dehnung von größer als 30 % bevorzugt. In bezug auf die bleibende Dehnung quer zur Orientierungsrichtung ist anzumerken, daß diese auch größer als 40 % bis größer als 70 % sein kann.

In Ausgestaltung der Erfindung enthält die Basisschicht ein Homopolymer oder ein Copolymer mit einem überwiegenden Anteil von Polyethylen hoher Dichte, mit einem Erweichungspunkt von 128 bis 136 ° C, insbesondere höher als 133 ° C. Homopolymere mit einem n-heptanlöslichen Anteil von weniger als 10 Gew.-% und Copolymere mit Alphaolefinen mit 3 bis 8 Kohlenstoffatomen und mit einem Gehalt dieser Alphaolefine von weniger als 8 Gew.-% stellen typische Beispiele für das bevorzugte thermoplastische Polyethylen hoher Dichte ( = HDPE) dar.

Neben dem Verzweigungsgrad ist die Kettenlänge des Polyethylens und damit das mittlere Molekulargewicht ein wichtiges Merkmal, das durch die Katalysatormenge und die Polymerisationsbedingungen variiert werden kann. Mit dem Molekulargewicht erhöht sich die Viskosität der Schmelze, die durch den Schmelzindex charakterisiert wird. Ein niedriger Schmelzindex bedeutet hohe Schmelzviskosität und hohes Molekulargewicht.

Das Polyethylen der Basisschicht besitzt zweckmäßigerweise eine Molmassenverteilung, für die zwischen dem Zahlenmittelwert der Molmassenverteilung $M_n$ und dem Gewichtsmittelwert der Molmassenverteilung $M_w$ die Beziehung

$$M_w = K \cdot M_n$$

gilt, mit dem Faktor K zwischen 4 und 10, insbesondere zwischen 5 und 8. Dabei beträgt der Gewichtsmittelwert der Molmassenverteilung $M_w$ zwischen 92.000 und 230.000 g/mol.

In weiterer Ausgestaltung der Erfindung liegt der Gewichtsmittelwert der Molmassenverteilung $M_w$ zwischen 115.000 und 184.000 g/mol. Der Kristallisationsgrad des Polyethylens der Basisschicht beträgt 35 bis 80 %, insbesondere 50 bis 75 %. Der Kristallisationsgrad hängt u.a. von der Dichte und dem Schmelzpunkt des Polyethylens ab, wobei die Kristallinität auch noch von der Temperaturführung während des Abkühlens abhängig ist. Die bevorzugten thermoplastischen Polyethylene haben einen Schmelzindex im Bereich von 0,1 g/10 min bis 8 g/10 min bei 190 °C und 5 kp Belastung (DIN 53 735), insbesondere von 0,4 g/10 min bis 4 g/10 min.

Die Polyethylenfolie ist entweder ein- oder beidseitig mit einer Deckschicht ausgestattet. Die Gesamtdicke der Folie beträgt erfindungsgemäß 15 bis 40 $\mu$m, wobei der Bereich von 20 bis 35 $\mu$m bevorzugt ist. Die ein- oder beidseitig auf die Basisschicht aufgebrachte funktionelle Deckschicht besitzt zweckmäßigerweise eine Dicke zwischen 0,3 und 15 $\mu$m, insbesondere zwischen 0,5 und 10 $\mu$m.

In Ausgestaltung der Erfindung enthalten die Basis- oder die Deckschicht oder die Deckschichten Additive wie Gleitmittel, Antistatika, Antiblockmittel, Farbpigmente. Als Gleitmittel haben sich Erukasäureamide, Carbonsäureamide, Polydialkyl- bzw. Polydimethylsiloxane bewährt. Bei den letzteren wird Polydialkylsiloxan mit 1 bis 4 Kohlenstoffatomen in der Alkylgruppe, insbesondere Polydimethylsiloxan bevorzugt. Das Polydialkylsiloxan hat eine kinematische Viskosität von 1.000 bis $10^6$ mm²/sec bei 25 °C, vorzugsweise von 5.000 bis 50.000 mm²/sec bei 25 °C. Die Einsatzmenge des Polydialkylsiloxans in der Deckschicht bzw. den Deckschichten beträgt 0,2 bis 1,5 Gew.-%, insbesondere 0,3 bis 1 Gew.-%, bezogen auf das Gewicht der Deckschichten. Dabei soll die Deckschichtdicke so gering wie möglich sein, da mit steigender Deckschichtdicke sich die Twistfähigkeit der Folie verschlechtert. Die Deckschichten an und für sich verbessern das Laufverhalten der Folie während der Herstellung. Sie werden durch Koextrusion auf die Basisschicht aufgebracht und bestehen aus dem gleichen Polymer wie die Basisschicht oder aus anderen Polymeren. Für die antistatische Ausrüstung wird z. B. ethoxyliertes Alkylamin verwendet. Als Antiblockmittel eignen sich insbesondere organische oder anorganische Teilchen mit einer mittleren Teilchengröße von 0,5 bis 4 $\mu$m, insbesondere von 1 bis 2 $\mu$m.

Das erfindungsgemäße Verfahren zur Herstellung einer Polyethylenfolie besteht darin, daß die die einzelnen Schichten der Folie bildenden Schmelzen durch eine Breitschlitzdüse oder Ringdüse koextrudiert werden und daß die erhaltene Mehrschichtfolie nach erfolgter Abkühlung und Verfestigung in Längsrichtung durch Strecken mittels unterschiedlich schnellaufenden Rollen bei einer Temperatur kleiner als der Erweichungspunkt des Polyethylens orientiert wird. Erfindungsgemäß werden die Streckbedingungen so gewählt, daß das Längsstreckverhältnis 4 bis 8, insbesondere 5 bis 7 beträgt. Eine Querverstreckung findet nicht statt, so daß die Verarbeitung der Folie weniger aufwendig als bei biaxial orientierten Folien ist. Weiterhin hat es sich gezeigt, daß die Twistfähigkeit um so besser ist, je stärker die Folie längsverstreckt ist.

Die Twistfähigkeit der Folie kann sehr gut durch zwei physikalische Größen beschrieben werden. Die Twistfähigkeit ist umso besser, je größer die bleibende Dehnung in Längs- und Querrichtung und umso kleiner die Reißdehnung in Längsrichtung ist. Eine gute Twistfähigkeit ist gegeben, wenn die bleibenden Dehnungen für beide Richtungen über 40 % sind.

Die Reißdehnung wird - wie der E-Modul und die Reißfestigkeit - nach DIN 53 455 bestimmt. Die erfindungsgemäßen Folien haben Reißdehnwerte in beiden Richtungen von kleiner 100 %, vorzugsweise kleiner 90 %. Sie sollten sich max. 10 % voneinander unterscheiden.

Die Bedruckbarkeit der Folie wird durch eine der üblichen Oberflächenbehandlungen vor dem Aufrollen erreicht, z. B. Flammbehandlung oder elektrische Coronabehandlung.

Zur Coronabehandlung, die nach einer der bekannten Methoden durchgeführt werden kann, wird zweckmäßigerweise so vorgegangen, daß die Folie zwischen zwei als Elektroden dienenden Elementen hindurchgeführt wird, wobei zwischen den Elektroden eine so hohe Spannung, meist Wechselspannung (etwa 10.000 V und 10.000 Hz), angelegt ist, daß Sprüh- oder Coronaentladungen stattfinden können. Durch die Sprüh- oder Coronaentladungen wird die Luft oberhalb der Folienoberfläche ionisiert und die Ionen verbinden sich mit den Molekülen auf der Folienoberfläche, so daß polare Einlagerungen in der im wesentlichen unpolaren Polymermatrix entstehen.

Im folgenden werden zwei Ausführungsbeispiele der Erfindung näher erläutert:

Beispiel 1

Durch Extrusion des Basisrohstoffes und anschließender Streckung in Längsrichtung wurde eine monoaxial orientierte Folie mit einer Dicke von 27 μm hergestellt.

Basisstoff:

99,45 Gew.-%

Polyethylen hoher Dichte, mit einem Gewichtsmittelwert der Molmassenverteilung von 200.000 g/mol und einem Zahlenmittelwert der Molmassenverteilung $M_n$ von 30.000 g/mol. Der Faktor K betrug somit 6,66.

0,10 Gew.-%

Erucasäureamid als Gleitmittel

0,15 Gew.-%

ethoxyliertes Alkylamin als Antistatikum

0,30 Gew.-%

$SiO_2$ als Antiblockmittel.

Das Streckverhältnis betrug 5,5 und die Strecktemperatur 102 °C. Die bleibende Dehnung quer zur Orientierungsrichtung betrug 81 %. Die optischen Eigenschaften der Folie wie der hohe Glanz und die geringe Trübung sind sehr gut, ebenso sind die Twisteigenschaften sehr gut.

Beispiel 2

Es wurde durch Koextrusion und anschließender Orientierung eine dreischichtige Folie mit einer Gesamtdicke von 27 μm hergestellt. Die Deckschichten hatten eine Dicke von jeweils 6 μm.

A - Basisschicht:

HDPE - Rohstoff des Beispiels 1 ohne Additive

B - Deckschichten:

99,6 Gew.-%

eines Blends aus dem HDPE-Rohstoff der Basisschicht und Polybutylen

0,4 Gew.-%

$SiO_2$ als Antiblockmittel.

Das Streckverhältnis betrug 5,5 und die Strecktemperatur 102 °C (wie in Beispiel 1). Die bleibende Dehnung der Folie quer zur Orientierungsrichtung betrug 83 %. Die optischen Eigenschaften der Folie und die Twisteigenschaften sind gut.

Beurteilung der Twisteigenschaften

Das Dreheinschlagverhalten der hergestellten Folien wurde anhand von Bonbonwickel beurteilt, mit denen Bonbons mittels Dreheinschlag auf Bonboneinwickelmaschinen eingeschlagen wurden. Als Einschlageigenschaften wurde das eigenständige Aufdrehen der eingewickelten Bonbons mit bloßem Auge direkt nach dem Einschlag und in Abständen von 48 Stunden über eine Zeitspanne von 4 Wochen beobachtet. Des weiteren wurde das Aufwikkelverhalten beurteilt, indem jeweils 50 Bonbons, die mit Dreheinschlag eingewickelt waren, auf einem Rütteltisch 72 Stunden gerüttelt wurden. Im Anschluß an diese Prozedur wurde geprüft, ob und wieviele Bonbons sich aus ihrem Dreheinschlag herausgelöst hatten. Die zu beurteilenden Eigenschaften wurden mit "sehr gut", "gut", "mäßig" und "schlecht" bewertet.

Bestimmung der bleibenden Dehnung

Aus der Folie wurde ein 15 mm breiter Folienstreifen quer zur Orientierungsrichtung geschnitten und in ein Zugprüfgerät eingespannt, wobei die Einspannlänge 200 mm betrug. Die Probe wurde dann mit 20 mm/min entsprechend 10 %/min gedehnt. Nach einer Dehnung von 10 %, d.h. bei einer Probenlänge von 220 mm, wurde die Probe automatisch mit gleicher Geschwindigkeit entspannt. Die bleibende Dehnung $D_b$ berechnet sich dabei gemäß

$$D_b = \frac{X\ \%}{10\ \%} \cdot 100\ \%$$

mit der bleibenden Verlängerung X der Probe in bezug auf die Einspannlänge, ausgedrückt in Prozenten der Einspannlänge.

**Patentansprüche**

1. Transparente Folie aus Polyethylen hoher Dichte, bestehend aus einer Basisschicht ohne Deckschicht oder mindestens einer Deckschicht, dadurch gekennzeichnet, daß die Polyethylenfolie monoaxial in Längsrichtung orientiert ist und eine bleibende Dehnung quer zur Orientierungsrichtung größer als 80 % und längs zur Orientierungsrichtung größer als 30 % aufweist.

2. Polyethylenfolie nach Anspruch 1, dadurch gekennzeichnet, daß die bleibende Dehnung quer zur Orientierungsrichtung größer als 70 % ist.

3. Polyethylenfolie nach Anspruch 1, dadurch gekennzeichnet, daß die bleibende Dehnung längs zur Orientierungsrichtung größer als 40 % ist.

4. Polyethylenfolie nach Anspruch 1, dadurch gekennzeichnet, daß die Basisschicht ein Homopolymer oder ein Copolymer mit einem überwiegenden Anteil von Polyethylen hoher Dichte enthält, mit einem Erweichungspunkt von 128 bis 136 °C, insbesondere höher als 133 °C.

5. Polyethylenfolie nach einem oder mehreren der Ansprüche 1 bis 3, dadurch gekennzeichnet, daß das Polyethylen der Basisschicht eine Molmassenverteilung besitzt, für die zwischen dem Zahlenmittelwert der Molmassenverteilung $M_n$ und dem Gewichtsmittelwert der Molmassenverteilung $M_w$ die Beziehung

$$M_w = K \cdot Mn$$

gilt, mit dem Faktor K zwischen 4 und 10, insbesondere zwischen 5 und 8.

6. Polyethylenfolie nach Anspruch 5, dadurch gekennzeichnet, daß der Gewichtsmittelwert der Molmassenverteilung $M_w$ zwischen 92.000 und 230.000 g/mol beträgt.

7. Polyethylenfolie nach Anspruch 6, dadurch gekennzeichnet, daß der Gewichtsmittelwert der Molmassenverteilung $M_w$ zwischen 115.000 und 184.000 g/mol beträgt.

8. Polyethylenfolie nach einem oder mehreren der Ansprüche 1 bis 7, dadurch gekennzeichnet, daß der Kristallisationsgrad des Polyethylens der Basisschicht 35 bis 80 %, insbesondere 50 bis 75 % beträgt.

9. Polyethylenfolie nach den Ansprüchen 1 bis 8, dadurch gekennzeichnet, daß die Gesamtdicke der Folie 15 bis 40 $\mu$m, insbesondere 20 bis 35 $\mu$m beträgt.

10. Polyethylenfolie nach Anspruch 1, dadurch gekennzeichnet, daß die ein- oder beiseitig auf die Basisschicht aufgebrachte funktionelle Deckschicht eine Dicke zwischen 0,3 und 15 $\mu$m, insbesondere zwischen 0,5 und 10 $\mu$m besitzt.

11. Polyethylenfolie nach Anspruch 1, dadurch gekennzeichnet, daß die Basis- oder die Deckschicht oder die Deckschichten Additive wie Gleitmittel, Antistatika, Antiblockmittel, Farbpigmente enthalten.

12. Polyethylenfolie nach Anspruch 11, dadurch gekennzeichnet, daß die Deckschicht oder die Deckschichten ein organisches oder anorganisches Antiblockmittel mit einer mittleren Teilchengröße von 0,5 bis 4 $\mu$m, insbesondere von 1 bis 2 $\mu$m, enthalten.

13. Verfahren zur Herstellung einer Polyethylenfolie gemäß einem oder mehreren der Ansprüche 1 bis 12, dadurch gekennzeichnet, daß die die einzelnen Schichten der Folie bildenden Schmelzen durch eine Breitschlitzdüse oder Ringdüse koextrudiert werden und daß die erhaltene Mehrschichtfolie nach erfolgter Abkühlung und Verfestigung in Längsrichtung durch Strecken mittels unterschiedlich schnellaufender Rollen bei einer Temperatur kleiner als der Erweichungspunkt des Polyethylens orientiert wird.

14. Verfahren nach Anspruch 13, dadurch gekennzeichnet, daß das Längsstreckverhältnis 4 bis 8, insbesondere 5 bis 7 beträgt.

15. Verwendung einer Polyethylenfolie nach einem oder mehreren der Ansprüche 1 bis 12 als Verpackungsmaterial.

16. Verwendung einer Polyethylenfolie nach Anspruch 15 zur Verpackung von Nahrungs- und/oder Genußmitteln.

17. Verwendung einer Polyethylenfolie nach Anspruch 15 als Verpackungsfolie für den Dreheinschlag.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 000 639 (METAL BOX)<br><br>* Zusammenfassung; Ansprüche *<br>* Seite 2, Zeile 16 - Zeile 20 *<br>* Seite 3, Zeile 19 - Zeile 23 *<br>* Seite 7, Zeile 12 - Zeile 23 *<br>--- | 1-9,13, 14 | C08J5/18<br>C08L23/04 |
| X | WORLD PATENTS INDEX LATEST<br>Week 9025,<br>Derwent Publications Ltd., London, GB;<br>AN 90-190678<br>& JP-A-2 127 041 (MITSUI TOATSU) 15. Mai 1990<br>* Zusammenfassung *<br>--- | 1-8,10, 13-17 | |
| A | DE-A-3 937 941 (HOECHST)<br>* Zusammenfassung; Ansprüche *<br>* Spalte 2, Zeile 15 - Zeile 58 *<br>* Spalte 3, Zeile 64 - Spalte 4, Zeile 12 *<br><br>----- | 1-17 | |

**RECHERCHIERTE SACHGEBIETE (Int. Cl.5)**

C08J
C08L

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1992 | METTLER R.M. |